(19) Europäisches Patentamt
European Patent Office
Office européen des brevets

(11) **EP 3 645 852 B1**

(12) **EUROPEAN PATENT SPECIFICATION**

(45) Date of publication and mention
of the grant of the patent:
**26.05.2021 Bulletin 2021/21**

(51) Int Cl.:
*F02D 41/14* *(2006.01)*   *F01M 13/00* *(2006.01)*

(21) Application number: **18735266.1**

(22) Date of filing: **27.06.2018**

(86) International application number:
**PCT/EP2018/067340**

(87) International publication number:
**WO 2019/002424 (03.01.2019 Gazette 2019/01)**

(54) **ENGINE MONITORING APPARATUS**

MOTORÜBERWACHUNGSGERÄT

APPAREIL DE SURVEILLANCE DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2017 GB 201710454**

(43) Date of publication of application:
**06.05.2020 Bulletin 2020/19**

(73) Proprietor: **Perkins Engines Company Limited
Eastfield, Peterborough PE1 5FQ (GB)**

(72) Inventor: **GREEN, Christopher J.
Peterborough PE2 8NE (GB)**

(74) Representative: **BRP Renaud & Partner mbB
Rechtsanwälte Patentanwälte
Steuerberater
Königstraße 28
70173 Stuttgart (DE)**

(56) References cited:
**EP-A1- 0 863 404     WO-A1-2014/055919
US-A- 4 189 940     US-B1- 6 422 224**

**Description**

**Technical field**

The present disclosure relates to apparatus for monitoring the performance of an internal combustion engine. For example, the present disclosure relates to smart devices for monitoring the performance of an internal combustion engine and transmitting engine data to a remote device.

**Background**

Physical objects and/or devices are increasingly provided with the capability to be networked together. Often referred to as the "Internet of Things", the ability for objects and/or devices to be uniquely identified and integrated into a communication network allows for additional functionality to be provided. Typically, such networked devices/objects are referred to as "smart" devices/objects.

For example, everyday objects/devices may include a module which monitors the performance/operation of the device and a module which communicates information regarding the performance/operation of the device over a network (i.e. the internet) to a remote device/object. Alternatively, a network connection between device/objects may be used to remotely send instructions and/or control signals to an interconnected device/object.

Typically, a smart device/object communicates with a remote device/object over a network. For example, a remote device to which a "smart" devices/object may connect to may be a server, a smart phone app or another "smart" device. Further, the network connection between the devices may be provided by, for example, an internet connection, a wireless internet connection (WiFi), a Bluetooth connection, a mobile internet connection or a combination of the above.

Often, incorporating "smart" functionality into devices/objects requires special design considerations. The module for performing the monitoring and communication may require a power source and/or a means of communicating over a network. Accordingly, devices/objects are often specially designed to incorporate smart features. As such, incorporating smart features into existing devices is often challenging.

In particular, "smart" functionality is increasingly being incorporated into machines incorporating engines in order to provide improved monitoring of such machines.

One known type of device for monitoring such a machine is an engine data logger. Engine data loggers may be used to monitor various engine parameters over time, such as engine speed. Monitoring engine speed over time may help with analysis of various aspects of the engine and its use, for example how a machine operator is typically using the machine's engine, what likely engine wear may be, etc.

Existing engine data loggers tend to be large and costly, either requiring an interface to a Control Area Network (CAN) bus in order to obtain a reading of the current engine speed from an Engine Control Unit (ECU), or requiring additional measurement equipment (such as mechanical, magnetic or laser tachometers, or fuel measurement equipment). Establishing an interface to the CAN bus may be difficult and time consuming, and providing additional measurement equipment may be costly and inconvenient.

Some existing engine data loggers may be configured to establish an internet connection with a server, where engine speed measurements may be stored over time and/or analysed. Establishing such connections can be costly, inconvenient and potentially unreliable, for example when the machine is located at the geographical limits of an internet network (for example, at the geographical limits of a Radio Access Network (RAN) cell, or at the geographical limits of a WiFi network area, etc).

Furthermore, it may also be desirable to obtain data in relation to a legacy machine that does not have appropriate inbuilt sensing and/or communications functionality. Accordingly, it may be desirable to attach such sensing functionality to an engine retrospectively. There may be a desire to achieve the functionality with maximum ease and minimum downtime.

WO 2014/055919 discloses a breather including desiccant for humidity control including an electronic end of life detection system.

US 6,422,224 discloses a remote air-oil separator.

EP 0,863,404 discloses a method and apparatus for the detection of an engine speed value from the emitted sound.

US 4,189,940 discloses an engine diagnostic apparatus including a first transducer positioned in the oil filler neck of the engine for translating the crankcase pressure waveform into a corresponding electrical waveform having a frequency component proportional to engine speed.

Against this background there is provided an engine breather filter assembly for monitoring an internal combustion engine according to claim 1

In this way, the engine breather filter assembly performs the mechanical requirements of a conventional engine breather filter assembly. Advantageously, the data sensing and monitoring functionality is self-contained within an engine breather filter assembly.

This facilitates straightforward replacement of a conventional engine breather filter assembly with one that also provides sensing and monitoring functionality. It does not require any significant machine downtime for installation. Furthermore, it does not require any costly modifications to interior engine components that would be difficult to reach without stripping down the machine and/or engine. In addition, its presence is discrete and it may not even be noticeable to a machine operator.

The sensor module comprises a pressure sensor and the sensed characteristic comprises engine crankcase pressure.

Advantageously, engine crankcase pressure is related to other engine characteristics that may be calculated by modest processing capacity within the engine breather filter assembly.

For example, the processor may be configured to measure crank case pressure at high speed. This may be used to calculate engine firing frequency and also to calculate a root mean squared (RMS) value of high speed crankcase pressure. The RMS value can be used to calculate engine torque.

The processor is configured to generate an aggregated summary of the total engine running at each combination of firing frequency and root mean squared engine crank case pressure.

By aggregating the data in this way, it is possible to summarise engine usage using a very modest amount of memory. This in turn means that transmission of the data requires only modest bandwidth.

The aggregated summary may be updated at a predetermined update frequency by incrementing the aggregated summary with a current value of firing frequency and a current value of root mean squared engine crank case pressure.

In this way, an overview of engine usage over a lifetime may be developed without recording an exponentially increasing quantity of data.

For example, the aggregated summary may take the form of a histogram.

The engine breather filter assembly may further comprise a communications module, configured to transmit the aggregated summary.

Since the amount of data stored in the aggregated summary does not increase with time (while the count for each data combination increases with time, the actual amount of data does not increase with time), the amount of data to be transmitted remains modest throughout the lifetime of engine use. Also, if data transmitted by the communications module is occasionally not received by the intended recipient, it is of no long term consequence since the next aggregated summary that is received successfully will provide all of the aggregated data up to that point (which includes the previously unreceived data).

The engine breather filter assembly may further comprise: an upstream chamber fluidly upstream of the filter cavity and configured to channel pre-filtered engine gas into the filter cavity; and a downstream chamber fluidly downstream of the filter cavity and configured to channel post-filtered engine gas out of the filter cavity. The engine breather filter assembly may further comprise: a drain port fluidly downstream of the filter cavity and configured to channel condensed liquid out of the filter cavity; and a first fluid conduit between the upstream chamber and a first sensing port of the pressure sensor.

In this way, the first sensing port of the pressure sensor may be in direct fluid contact with the crankcase of the engine.

The engine breather filter assembly may further comprise a second fluid conduit between the downstream chamber and a second sensing port of the pressure sensor.

In this way, the second sensing port of the pressure sensor may be in direct fluid contact with cleaned gas that has been filtered by a filter element housed within the breather filter assembly.

The pressure sensor may be a differential pressure sensor configured to sense a differential pressure between the first sensing port and the second sensing port.

The processor may be configured to receive engine crankcase pressure and to determine a frequency of crankcase pressure oscillation thereby to determine the value representative of the firing frequency.

Accordingly, modest processing power may be required to calculate firing frequency from the sensed data.

The sensor module may further comprise a vibration sensor, wherein the sensed characteristic of the internal combustion engine comprises vibration data with time.

The sensed characteristic may comprises both engine crankcase pressure and engine vibration data. The processor may use both engine crankcase pressure and engine vibration data to improve accuracy of firing frequency.

The engine breather filter assembly may comprise one or more additional transducers, such as a temperature sensor, wherein, optionally, the communications module is configured to transmit data derived from the one or more additional transducers.

In this way, further data may be transmitted onward for engine monitoring.

**Brief description of the drawings**

A first embodiment of the invention will now be described with reference to the accompanying drawings in which:

Figure 1 shows a three dimensional view of a smart engine breather filter assembly according to the first embodiment;

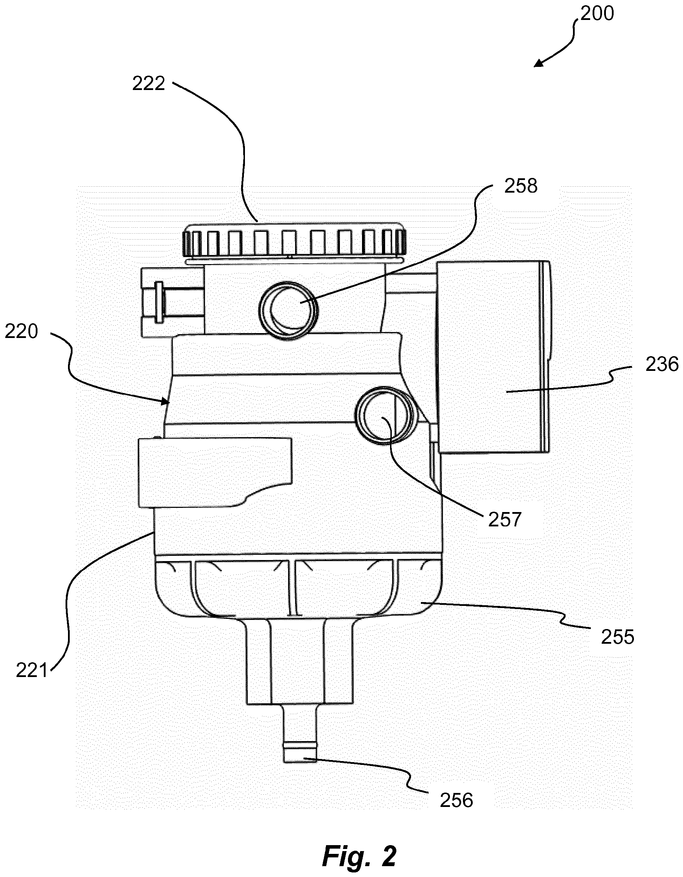

Figure 2 shows a two-dimensional view of the smart engine breather filter assembly of the first embodiment;

Figure 3 shows a cross-sectional view of the smart engine breather filter assembly of the first embodiment;

Figure 4 shows an exploded three-dimensional view of the smart engine breather filter assembly of the first embodiment;

Figure 5 shows a further exploded three-dimensional view of the smart engine breather filter assembly of the first embodiment;

Figure 6 shows a cross-sectional view of the smart engine breather filter assembly of the first embodiment in which "clean" and "dirty" fluid sides are clearly distinguished;

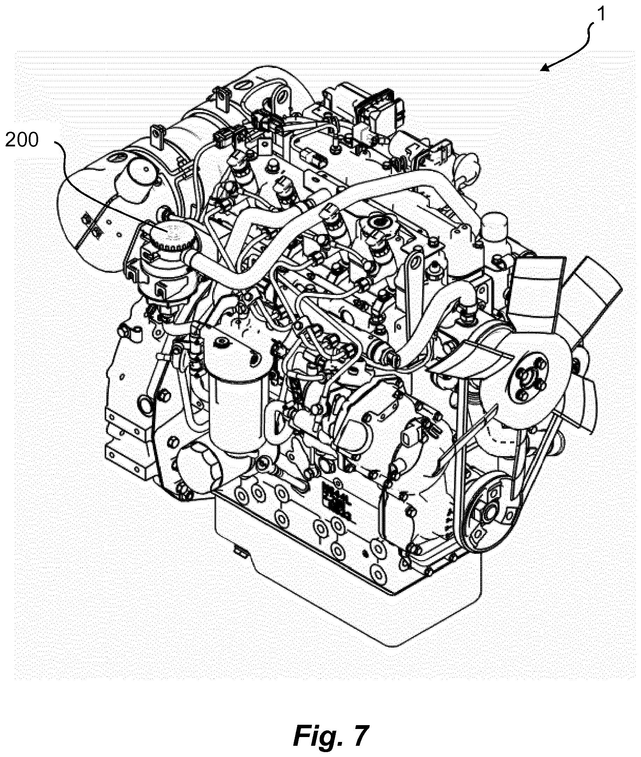

Figure 7 shows an internal combustion engine with the smart engine breather filter assembly of the first embodiment in situ;

Figure 8 shows a flow diagram of a monitoring routine performed by the local monitoring device according to an embodiment of this disclosure;

Figure 9 shows a flow diagram of the processing steps performed by the remote application according to an embodiment of this disclosure;

Figure 10 shows a data plot of pressure sensor data generated by a differential pressure sensor according to an embodiment of this disclosure;

Figure 11 shows a frequency domain transformation of the pressure sensor data shown in Figure 10;

Figure 12 shows a flow diagram of a monitoring routine performed by the local monitoring device according to a further embodiment of this disclosure; and

Figure 13 shows a flow diagram of the processing steps performed by the remote application according to a further embodiment of this disclosure.

**Specific description**

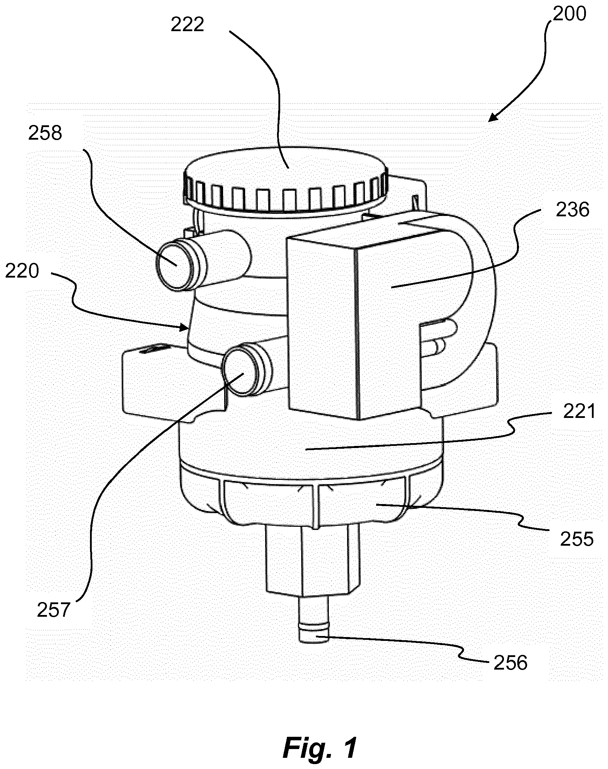

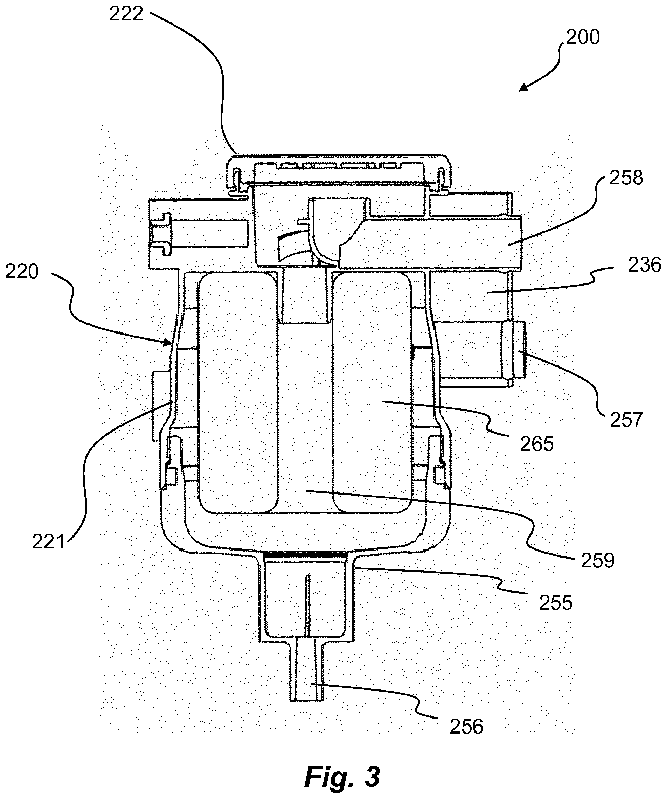

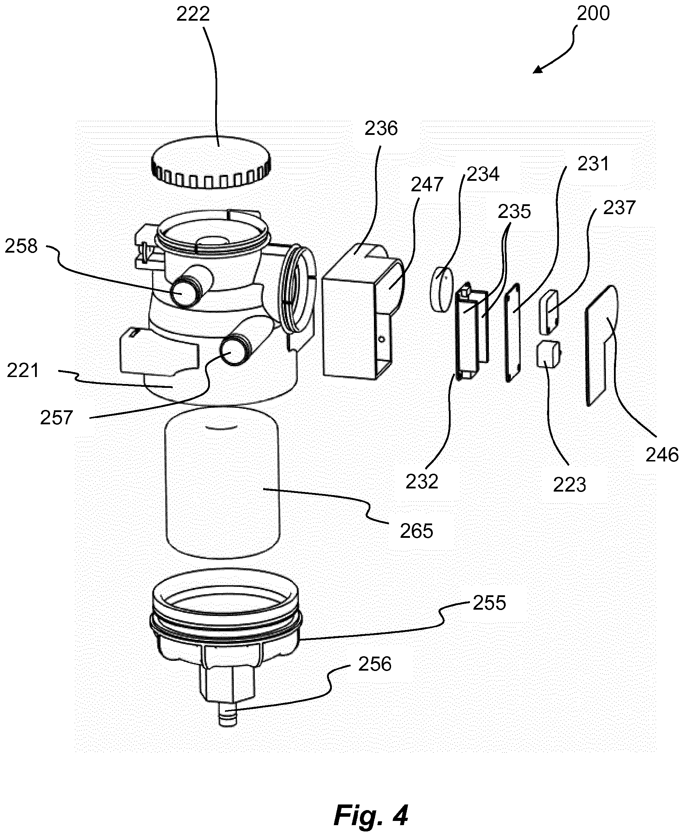

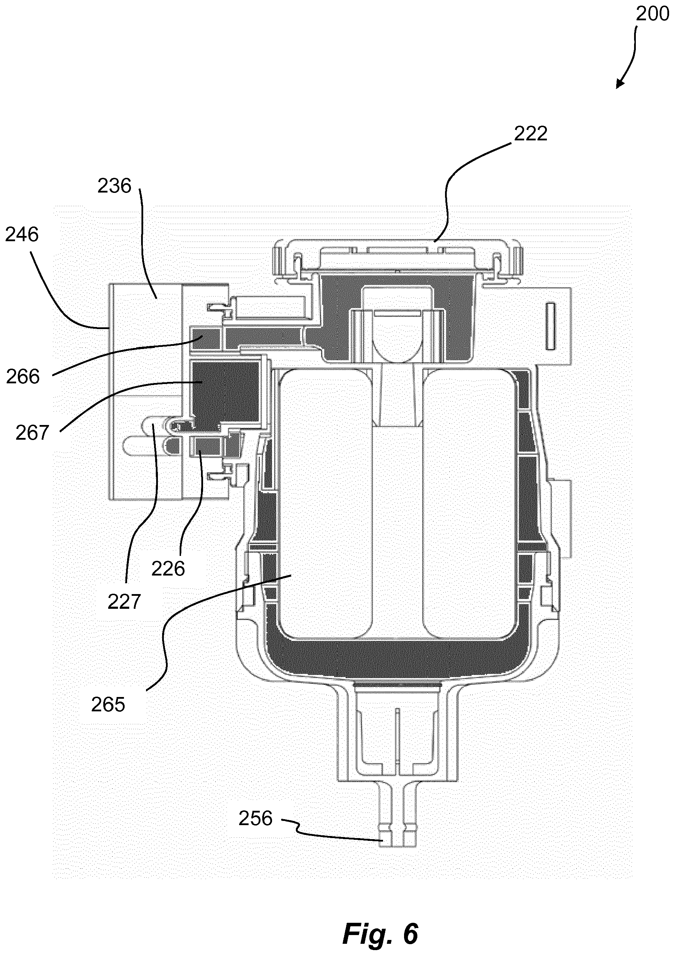

Figure 1 shows a smart breather filter assembly 200 according to a first embodiment of the disclosure.
The smart breather filter assembly 200 comprises a casing 220 having a casing body 221, a casing lid 222 and casing base 255. Within the casing 220 is a breather filter cavity 259 (see Figure 3) configured to house a conventional breather filter element 265.
Referring to Figure 4, the smart breather filter assembly 200 further comprises a gas inlet 257 for receiving gas from the crankcase likely to contain airborne oil. The gas inlet 257 opens into a pre-filter chamber 267 (see Figure 6). The smart breather filter assembly 200 further comprises a gas outlet 258 downstream of a post-filter chamber 266 for channelling back to the crankcase of the engine gas that has been filtered by the breather filter element 265 in the breather filter cavity 259. The smart breather filter assembly 200 further comprises an oil outlet 256 for releasing back to the crankcase any oil that has, via the breather filter element 265, been condensed out of the gas received from the crankcase via the gas inlet 257. The oil outlet 256 may be located in the casing base 255.
The casing lid 222 and the casing body 221 may have corresponding screw threads such that the casing lid 222 may seal a first end of the casing body 221. Similarly, the casing base 255 and the casing body 221 may have corresponding screw threads such that the casing base 255 may seal a second end of the casing body 221. The casing base 255 may be dimensioned such that its removal from the smart breather filter assembly 200 facilitates insertion/replacement of a breather filter element 265 within the breather filter cavity 259.
In this way, smart breather filter assembly 200 provides all the functionality of a prior art breather filter assembly, namely being configured to receive a breather filter for filtering oil out of the crankcase gases.

Referring to Figure 4, the smart breather filter assembly 200 further comprises an electronics housing 236 fastened to the casing body 221 of the smart breather filter assembly 200. The electronics housing 236 comprises a lid 246 by which the contents of the housing may be accessed. Within the electronics housing 236 there is located a sensor module including a differential pressure sensor 223 and an accelerometer 237 mounted on a first circuit board 231. Also contained within the electronics housing 236 are a communications module 238 and a microprocessor 239 mounted on a second circuit board 232. The communications module 238 may comprise a Bluetooth chip or other communication means. The housing further contains a battery 234. The battery 234 is connected directly or indirectly to one or both of the circuit boards 231, 232 via a pair of supply connectors 233. Further connections 235 for data and/or power are provided between the first and second circuit boards 231, 232.

The differential pressure sensor 223 may comprise a first sensor port 224 and a second sensor port 226. The differential pressure sensor 223 may be configured to sense absolute pressure at either or both of the first sensor port 224 and the second sensor port 226 or it may be configured to sense differential pressure between the first sensor port 224 and the second sensor port 226.

In this way, the differential pressure sensor 223 may be configured to determine one or more of: absolute pressure downstream of the breather filter element; absolute pressure upstream of the filter; and differential pressure between the first sensor port 224 and a second sensor port 225.

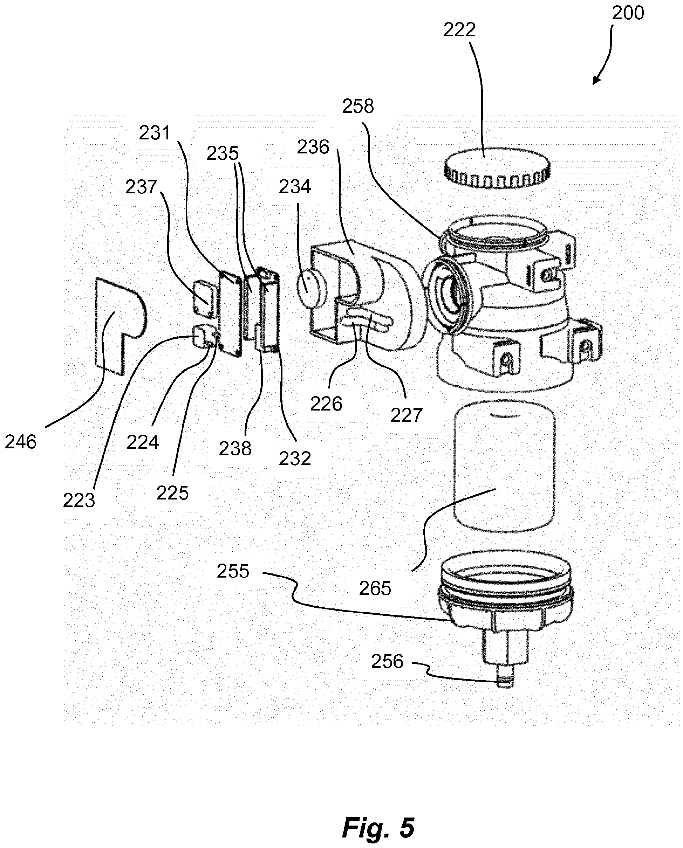

As shown in Figure 5, the smart breather filter assembly 200 further comprises first and second conduits 226, 227. The first sensor port 224 is in fluid communication with the first conduit 226 while the second sensor port 225 is in fluid communication with the second conduit 227. Overall, the arrangement results in the first sensor port 224 being in fluid communication with post-filtered gas and the second sensor port 226 being in fluid communication with pre-filtered gas. Accordingly, when sensing the differential pressure between the two ports, the sensor senses a pressure difference (e.g. a pressure drop) across the breather filter element 265.

Replacement of the battery 234 is facilitated by removal of the lid 246 of the electronics housing 236.

While, in the first embodiment, there is shown and described both an accelerometer and a differential pressure sensor, it may be that in alternative embodiments, only one or the other of these two sensors is provided. Furthermore, it may be that an absolute pressure sensor is provided, instead of a differential pressure sensor, for measuring an absolute pressure at either or both of upstream of the filter and downstream of the filter. Examples of other specific embodiments are provided towards the end of this description, following the description of the use of the first embodiment.

In use, the smart breather filter assembly 200 of the first embodiment of the disclosure is placed in situ on an engine, potentially in direct replacement of a conventional breather filter assembly.

As with a prior art breather filter assembly, when the smart breather filter assembly 200 is in situ on an internal combustion engine 1, it will vibrate in unison with the internal combustion engine 1. Furthermore, the pressure sensor ports will be at the same pressure as the pressure on either side of the breather filter element 265. Accordingly, a pressure at the first and/or second port of the differential pressure sensor is the same as the pressure, or at least predictably related to the pressure, within the crankcase of the engine. When the breather filter element 265 is new, the pressure drop across the breather filter element 265 may be modest. When the breather filter element 265 has built up hours of use, a build-up of material on the breather filter element 265 may result in a more sizable pressure difference across the breather filter element 265.

Data derived from the differential pressure sensor 223 may be used to calculate one or more of engine speed, torque and altitude.

Data derived from the accelerometer 237 may be used to calculate engine speed, engine angle, engine orientation, and/or engine incline.

The processor 239 receives the sensed differential pressure data from the differential pressure sensor 223.

Every time a cylinder fires, the cylinder pressure increases, forcing the piston downwards. A small amount of this cylinder pressure leaks into the crankcase, past the piston rings and valve seals. This causes a pulse in crankcase pressure every time a cylinder fires. Viewed at high speed, the crankcase pressure pulses occur at a frequency equivalent to the firing frequency of the engine.

The processor 239 uses the sensed differential pressure data to determine engine firing frequency in Hz. This is achieved by the processor performing a time domain to frequency domain conversion in the crankcase pressure signal. This dominant frequency is assumed to be the firing frequency of the engine.

The firing frequency of the engine is related to engine speed in accordance with the following formula:

$$Engine\_speed\_(rpm) = \frac{Firing\_frequency\_(Hz) \times 60 \times 2}{Number\_of\_engine\_cylinders} \qquad \text{Equation 1}$$

Since a specific smart breather filter assembly may be compatible with a number of different engines, the number of engine cylinders may not be known to the processor 239. Accordingly, in embodiments where the number of cylinders is not known to the processor, the processor 239 may output the firing frequency of the engine to the communications module 238 by which that data is onwardly transmitted as appropriate. On receipt of that data by an off-board processor, which has available the number of cylinders of the engine, the calculation above may be performed in order to determine the engine speed. The off-board processor may be that of a smart device (such as a smart phone or tablet) running an application. Alternatively or in addition, the off-board processor may be that of a remote server. Such a server may contain a database of details of engine types or specific engines to which the smart breather filter assembly may be attached. The database may provide data regarding the engine, including the number of engine cylinders.

The calculation of engine speed may be performed on the off-board processor (e.g. on a smart device such as a smart phone or on the server). In this way, the calculations that require information about the engine other than that derived from the smart breather filter assembly are not calculated on the smart breather filter assembly. In this way, the smart breather filter assembly is generic and need not be in any way specific to the engine (other than needing to be mechanically compatible with a prior art smart breather assembly of the same engine).

A registration procedure may be undertaken when the smart breather assembly is first installed on an engine. The registration procedure may involve initiating a link in an off-board processor (most likely the server) between the unique smart breather filter assembly and the engine to which it is attached. In one exemplary embodiment, the smart breather filter assembly may comprise a QR code. As part of a set-up routine, the operator may be invited to use a smart device camera to photograph the unique QR code. The operator may also, as part of the same set-up routine, be invited to input the engine number of the engine to which the smart breather filter assembly is attached. These two pieces of information (the unique identifier of the smart breather filter assembly and the unique identified of the engine) may then be linked to one another in a remote server that includes the database. In this way, the remote server is able to use the information regarding the engine stored in the database in combination with firing frequency data sent to the server from the smart breather filter assembly in order to calculate engine speed in accordance with Equation 1.

As the skilled person would be well aware, a QR code is one of many possible alternatives that might be used to identify the smart breather filter assembly. Other options would include a barcode, a unique serial number, and RFID tag or any other technique for providing, displaying or transmitting a unique identifier.

Highspeed crankcase pressure, as determined by the smart breather filter assembly, may further be employed (e.g. in the off-board processor) in the calculation of engine torque. Cylinder pressure is proportional to torque. Accordingly, for the reasons already given, crankcase pressure is also proportional to torque. In a closed circuit breather engine (i.e. an engine where the crankcase gasses are filtered and ingested by the engine), as engine torque increases the crankcase pressure decreases. In an open circuit breather engine (i.e. an engine where the crankcase gasses are filtered and vented to atmosphere), as engine torque increases the crankcase pressure increases. The high speed crankcase pressure data traces can be processed to extract a value proportional to torque, regardless of breather system. Whether the engine is a closed circuit breather engine or an open circuit breather engine may be determined from the database once the unique engine identifier has been input during the registration procedure.

The RMS (signal average) of high-speed crankcase pressure is proportional to engine torque at a specific speed. A dynamic estimate of engine percent load (percentage of maximum available torque for the particular speed) may be calculated. The dynamic percent load estimate requires no calibration and improves in accuracy with time. Time history and histogram data is stored in the off-board server.

In a second embodiment of the smart breather filter assembly, the differential pressure sensor is substituted for an absolute pressure sensor located upstream of the filter. In a third embodiment of the smart breather filter assembly, the differential pressure sensor is substituted for an absolute pressure sensor located downstream of the filter. In all of the first, second and third embodiments, the accelerometer is optional. In a fourth embodiment , which is not part of the invention, of the smart breather filter assembly, no pressure sensor is provided and firing frequency data is obtained only from the accelerometer.

Optionally, the sensor module may further comprise one or more additional transducers, such as a temperature sensor. Furthermore, the communications module may be configured to transmit data derived from the one or more additional transducers.

The microprocessor 239 may comprise or be used in conjunction with any suitable memory technology, for example it may comprise a storage disk and/or a solid-state storage device such flash memory and/or an SD (Secure Digital) card, and may comprise volatile and/or non-volatile memory. The communications module 238 may be configured to support communications with one or more electronic devices external to the smart breather filter assembly 200 according to any one or more communications protocols/architectures. For example, the communications module 238 may support one or more types of wired communications, such as USB, Firewire, Thunderbolt, Ethernet, etc and/or one or more types of wireless communications, such as WiFi, Bluetooth, Bluetooth LE, Near Field Communications (NFC), Infra-red (IR) 5G, LTE, UMTS, EDGE, GPRS, GSM, or any other form of RF based data communications. The communications module 238 enables at least one communications interface to be established between the smart breather filter assembly 200 and an external network element. For example, the network element may be an electronic device, such as an internet server and/or a mobile telephone or smartphone and/or a tablet computer and/or a laptop computer and/or a desktop computer, etc. The interface may be a wired or wireless interface.

The frequency at which the sensor or sensors sample obtain sampled values may be every 2ms (which is a sampling frequency of 500Hz). However, the sampling frequency may be any suitable frequency, for example any frequency between 50Hz-10,000Hz, such as 200Hz, or 1000Hz, or 8000Hz, or any frequency between 100Hz-5000Hz, such as 150Hz, or 800Hz, or 2000Hz, or any frequency between 100Hz-1000Hz, such as 400Hz, or 600Hz, etc. The sampling frequency may be chosen in consideration of the maximum dominant frequency expected for engine firing frequency (for example, a sampling frequency that is sufficiently high to measure the maximum expected dominant frequency accurately).

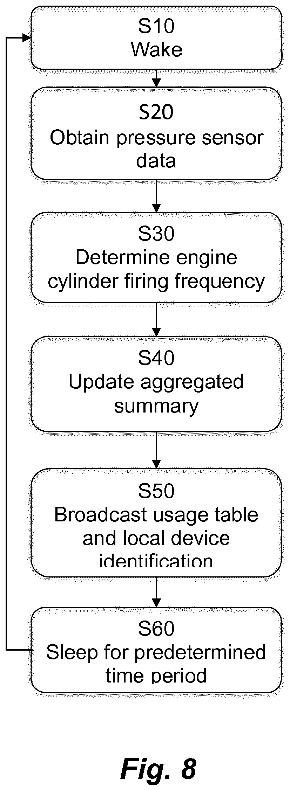

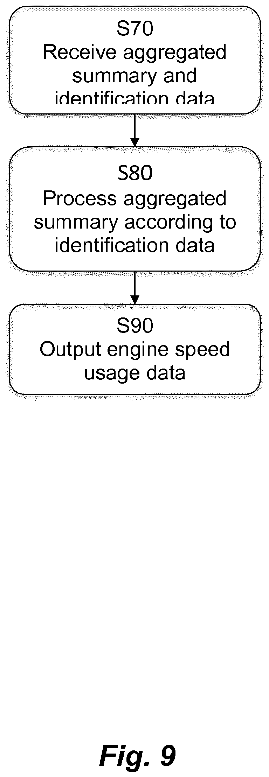

An embodiment of a method of monitoring the usage of an internal combustion engine according to this disclosure is shown in Figures 8 and 9. The method according to this embodiment is performed using a local monitoring device and a remote application. Figure 8 shows the method steps performed by the local monitoring device according to this embodiment while Figure 9 shows the method steps performed by the remote application according to this embodiment.

In Step S10 of Figure 9, the microprocessor 239 wakes from a lower power state. In step S20, the microprocessor 239 receives from the differential pressure sensor 223 sensed differential pressure data indicative of the difference between the crankcase pressure and the external ambient pressure. The microprocessor 239 samples the differential pressure sensor data repeatedly over a time period to generate pressure sensor data (a pressure sensor data set). As such, data is generated in the microprocessor 239 which is representative of the crankcase pressure of the internal combustion engine.

The microprocessor 239 samples the differential pressure sensor for a determination period of time, which may be any period of time that is sufficient for obtaining a reliable measurement of the firing frequency of the engine cylinders and/or the crankcase pressure of the internal combustion engine. For example, the determination period of time may be any period of time between 0.01 seconds to 10 minutes, such as 0.1 seconds, or 1 second, or 5 seconds, or 1 minute, or 8 minutes, or any period of time between 0.1 seconds to 1 minute, such as 0.3 seconds, or 3 seconds, or 10 seconds, or any period of time between 1 second to 1 minute, such as 8 seconds, or 42 seconds, etc. The microprocessor 239 may comprise a clock for counting the determination period of time, such as a processor clock, or a crystal clock, or a GPS synchronised clock. The microprocessor 239 may generate the pressure sensor data set by periodically sampling the value output from the differential pressure sensor 223. For example, it may sample the output from the differential pressure sensor 223 every 2 ms (which is a sampling frequency of 500Hz) and record each of the sampled values during the determination period of time in order to generate data indicative of the crankcase pressure of the engine. The generated data may also be suitable for recording a plurality of vibrations indicative of the vibrations of the engine. The sampling frequency may be any suitable frequency, for example any frequency between 50Hz-10,000Hz, such as 200Hz, or 1000Hz, or 8000Hz, or any frequency between 100Hz-5000Hz, such as 150Hz, or 800Hz, or 2000Hz, or any frequency between 100Hz-1000Hz, such as 400Hz, or 600Hz, etc. The sampling frequency may be chosen in consideration of the maximum dominant frequency expected for the engine vibration (for example, a sampling frequency that is sufficiently high to accurately measure the maximum expected dominant frequency in the engine vibration).

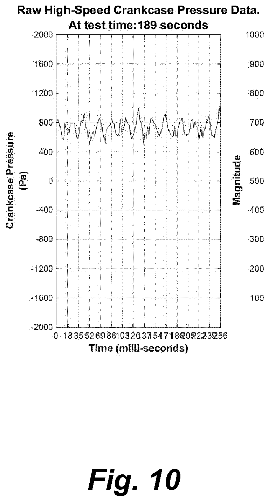

Figure 10 shows an example plot of the differential pressure sensor data generated in Step S20. In this example, the sampling frequency is 500Hz and the determination period of time is 0.256 second. The x-axis on the plot is the time and the y-axis on the plot is the difference between the crankcase pressure of the internal combustion engine and the ambient pressure in kPa.

In Step S30, the microprocessor 239 determines the firing frequency of the cylinders of the engine based on the generated pressure sensor data. Every time a cylinder fires in the internal combustion engine, the cylinder pressure increases, forcing the piston downwards. A small amount of this cylinder pressure will leak into the crankcase, past the piston rings and valve seals. Accordingly a pulse in the crankcase pressure is generate every time a cylinder fires. Viewed at high speed, the crankcase pressure pulses occur at a frequency equivalent to the firing frequency of the engine. So, by performing a time domain to frequency domain transformation of the generated pressure sensor data, the firing frequency of the internal combustion engine may be determined. The firing frequency of the internal combustion engine may be the dominant frequency present in the frequency domain transformation of the pressure sensor data. The microprocessor 239 may determine the dominant frequency for example by performing a time-to-frequency domain transformation on the recorded engine vibration, such as a Fourier transform, or a Fast Fourier Transform (FFT), or a Laplace transform, etc.

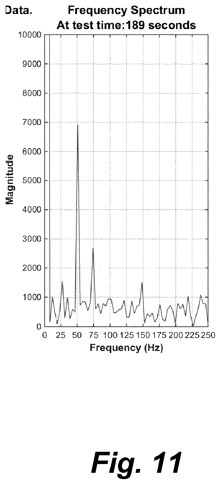

Figure 11 shows a plot of the frequency response (i.e., the time-to-frequency transformation) of the generated pressure sensor data shown in Figure 10. The x-axis of the plot in Figure 11 is frequency in units of Hz and the y-axis of the plot in Figure 11 is a dimensionless measure of magnitude.

The microprocessor 239 may determine the dominant frequency by identifying the frequency with the greatest magnitude in the frequency response plot. The microprocessor 239 may consider only a particular range of frequencies within the frequency response when finding the dominant frequency. The range may be defined by a lower frequency limit and an upper frequency limit, both of which may be set in consideration of expected engine operation frequencies, in order to exclude any frequencies that fall outside of expected engine operation. The expected range of firing frequencies produced by an internal combustion engine will depend on the range of allowable engine revolution speeds during operation of the engine and the number of cylinders in the specific internal combustion engine. For example, if the idling speed of the engine is expected to generate a firing frequency of about 35Hz and the maximum possible engine speed is expected to generate a firing frequency of about 90Hz, the considered range may be 30Hz (lower frequency limit) to 100Hz (upper frequency limit). Of course, the maximum and minimum frequencies that an engine should generate will vary for different types of engine, for example with cylinder configuration (straight cylinder, V cylinder, Boxer, etc), engine speed limits and engine idle speeds. Therefore, the range of frequencies to be considered during determination of the dominant frequency may be set to allow for a range of different firing frequencies of different types internal combustion engines.

The dominant frequency may be the frequency corresponding to the peak frequency response. Where there are two or more peaks in the frequency response (for example, because the engine cylinder firing frequency changed during the measurement period of time), the dominant frequency may be the frequency corresponding to the peak with the greatest magnitude. Thus, the dominant frequency may be the firing frequency that was generated by the engine for the longest period of time during the measurement period of time.

In Step S40, the microprocessor 239 may record the determined firing frequency of the engine cylinders in the memory module of the microprocessor. There are a number of different ways in which the determined firing frequency may be recorded in the memory module. One exemplary way in which the determined firing frequency may be recorded in the memory module is explained below.

The microprocessor 239 may look up an element of an aggregated summary stored in the memory module based on the determined engine cylinder firing frequency. The aggregated summary may comprise a plurality elements corresponding to ranges of engine cylinder firing frequencies and the cumulative time for which the engine has been determined to be operating within each of the engine cylinder firing frequency ranges. As such, the aggregated summary is a data table comprising information regarding the usage history of the internal combustion engine for a plurality of ranges of engine firing frequencies. A non-limiting example of an aggregated summary according to this disclosure is set out below:

| Engine cylinder firing frequency | Cumulative time (Hours) |
| --- | --- |
| 0 Hz-10 Hz | 4.93 |
| 10 Hz-20 Hz | 6.76 |
| 20 Hz - 30 Hz | 5.49 |
| 30 Hz - 40 Hz | 2.65 |
| 40 Hz - 50 Hz | 1.14 |
| 50 Hz - 60 Hz | 5.32 |
| 60 Hz - 70 Hz | 9.89 |
| 70 Hz - 80 Hz | 3.10 |
| 80 Hz - 90 Hz | 3.92 |
| 90 Hz - 100 Hz | 0.74 |
| 100 Hz - 110 Hz | 6.21 |
| 110 Hz - 120 Hz | 4.42 |
| ... | ... |

It will be appreciated that the aggregated summary may comprise any number of engine cylinder firing frequency ranges, and the ranges may be of any suitable size and spread.

The microprocessor 239 may determine which of the plurality of engine cylinder firing frequency ranges the determined engine cylinder firing frequency lies within and then add the determination period of time to the cumulative time for that element of the aggregated summary. As such, the local monitoring device generates an aggregated summary by updating an element of the aggregated summary based on the determined firing frequency of the engine. Accordingly, a picture of the operation of the internal combustion engine may be built up over time.

Preferably, the element of the aggregated summary is updated by incrementing the existing value of the element with an amount corresponding to the determination period of time. The determination period of time may be the amount time elapsed following a previous performance of the engine monitoring routine i.e. the amount of time elapsed since the previous engine firing frequency measurement.

In the example described above in respect of Figures 10 and 11, if the determined engine cylinder firing frequency is 50.5 Hz the microprocessor 239 may determine that the determined engine cylinder firing frequency lies within the range 50 - 60 Hz. The microprocessor 239 may then add the determination period of time to the cumulative time recorded for that element in the aggregated summary. For example, if the cumulative time recorded in the aggregated summary for the element corresponding to the engine firing frequency range of 50 - 60 Hz is 5.32 hours, and the determination period of time is 27 seconds, the cumulative time recorded in the element representing the range 50 - 60 Hz will be updated to 5.3275 hours.

Having added the determination period of time to the cumulative time for the determined element of the aggregated summary, the microprocessor may then write the updated element to the aggregated summary in the memory module.

It will be appreciated that the engine firing frequency ranges and cumulative times may be saved in the memory module in any suitable way, for example using any known database or matrix techniques.

After recording the determined engine firing frequency to the memory module in accordance with the above exemplary method, the microprocessor 239 may return to Step S20. In this way, the engine cylinder firing frequency may be regularly determined, or sampled, (for example, every 0.5 seconds) and then stored in the memory module, such that extensive engine firing frequency data may be stored over time without an increase in the size of the aggregated summary stored in the memory module.

It will be appreciated that after recording of the values indicative of sensed crankcase pressure over the determination period of time is completed in Step S20 and the process proceeds to Step S30, recording of values indicative of sensed crankcase pressure for the next determination period of time may immediately begin whilst Steps S30 and S40 are being performed, such that there is no period of operation of the engine that does not contribute to a determination of the engine cylinder firing frequency. Consequently, whilst Steps S30 and S40 are being carried out in respect of the most recently completed recording of the values indicative of sensed crankcase pressure, the next recording of values indicative of sensed crankcase pressure may already be underway.

In step S50, the microprocessor 239 may broadcast/transmit the aggregated summary to a remote application. The broadcasting step may be performed every time the aggregated summary is updated. Alternatively, the broadcasting step may only be performed after at least: 50, 100, 200, 500, 1000, or 5000 updates to the aggregated summary. For example, the local monitoring device may be configured to broadcast at least once, twice or three times per day. By limiting the number of times the local monitoring device broadcasts the aggregated summary, the local monitoring device may conserve power and not utilise excessive amounts of bandwidth of a communications network.

In step S50, the microprocessor 239 also broadcasts/transmits identification data which allows a remote application to identify the internal combustion engine to which the local monitoring device is connected to. For example, the processing and communications module 238 may broadcast a unique identification code, for example a serial number of the local monitoring device or a media access control (MAC) address of the local monitoring device.

The microprocessor 239 may transmit/broadcast the aggregated summary and the identification data over a wireless network to a remote application which may be executed on a remote server.

After updating the aggregated summary in step S40, or broadcasting the data in step S50, the local monitoring device may optionally sleep for a predetermined period of time before performing the next measurement of the crankcase pressure. For example, the local monitoring device may sleep for 30 seconds, 60 seconds, 120 seconds or 240 seconds.

According to the embodiment shown in Figure 8, the sleep step S60 is configured to sleep the device for a period of 30s. During the sleep step, the local monitoring device may operate in a low power state. The microprocessor 239 may consume little or no energy, and the pressure sensor may not be operated/powered until the sleep step is over. By sleeping for a period of time between measurements of the crankcase pressure, engine monitoring by the local monitoring device may be performed for an extended period of time whilst conserving power of the local monitoring device. In order to ensure that the total time in the aggregated summary reflects the usage of the engine, the predetermined period of time for the sleep step duration S60 may be used as the determination period for incrementing the cumulative time recorded in an element of the aggregated summary.

Preferably, the above described engine monitoring routine is repeated over time in order to build up a history of engine usage data over a time period (an aggregated summary of the engine usage). The time period may be at least a single day, a week, a month or a year. The engine monitoring routine may be repeated a plurality of times in a single day. As discussed above, preferably steps S10, S20, S30 and S40 are performed in sequence and repeated relatively frequently, for example every 30 seconds in order to build up a profile of the usage of the engine. Step S50 is preferably performed only a few times each day, in order to conserve the battery of the local monitoring device.

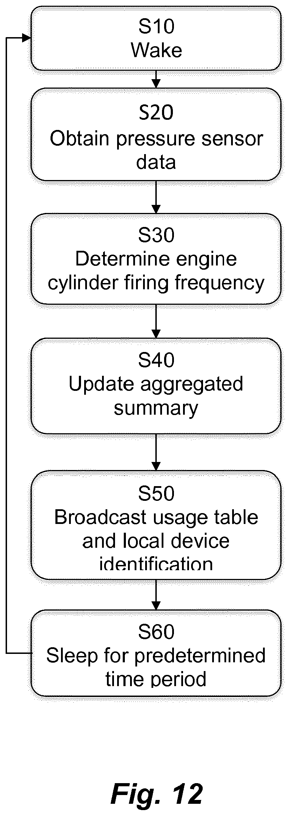

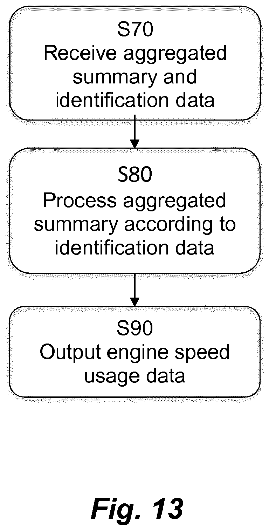

Figure 12 shows the method steps performed by the local monitoring device according to this further embodiment while Figure 13 shows the method steps performed by the remote application according to this further embodiment.

As shown in Figure 12, the local monitoring device performs a monitoring routine for monitoring the pressure of an engine crankcase. Step S110 of waking, step S120 of obtaining pressure sensor data and step S130 of determining the engine cylinder firing frequency may be performed as described in steps S10, S20 and S30 respectively according to the previous embodiment.

In step S135 of this further embodiment, the average engine crankcase pressure is determined. Preferably, the root mean square (RMS) of the engine crankcase pressure is determined by the microprocessor from the data points recorded from the pressure sensor.

In step S140 the determined values of engine firing frequency and RMS crankcase pressure are used to generate an aggregated summary of the engine usage. As with Step S40 of the previous embodiment, the aggregated summary comprises a plurality of elements which reflect the cumulative usage of the internal combustion engine. In this further embodiment, the elements of the aggregated summary are provided in a matrix form, whereby the determined values of engine firing frequency and RMS crankcase pressure are used to select an element to be updated.

The aggregated summary may comprise a plurality elements corresponding to ranges of engine cylinder firing frequencies and ranges of crankcase pressures. Each element in the aggregated summary containing a value indicative of the cumulative time for which the engine has been determined to be operating within engine cylinder firing frequency ranges and crankcase pressure range. As such, the aggregated summary is a data table comprising information regarding the usage history of the internal combustion engine for a plurality of ranges of engine firing frequencies and a plurality of crankcase pressure ranges. A non-limiting example of an aggregated summary according to this embodiment of the disclosure is set out below:

| Histogram of time (seconds) spent at each firing frequency and crankcase pressure RMS for the engine. | | | | | | | | | | | | | | |
|---|---|---|---|---|---|---|---|---|---|---|---|---|---|---|
| | | Frequency (Hz) | | | | | | | | | | | | |
| | | 30 | 40 | 50 | 60 | 70 | 80 | 90 | 100 | 110 | 120 | 130 | 140 | 150 |
| RMS CCPress (kPa) | 1.5 | | | | | | | | | | | | | |
| | 1.4 | | | | | | | 16 | 65 | 44 | 41 | | | |
| | 1.3 | | | | | | 61 | 100 | 52 | 18 | 81 | | | |
| | 1.2 | | | | | 93 | 12 | 74 | 81 | 1 | 93 | 15 | | |
| | 1.1 | | | | | 57 | 37 | 1 | 51 | 24 | 11 | 41 | | |
| | 1.0 | | | | 85 | 81 | 87 | 99 | 40 | 56 | 37 | 1 | | |
| | 0.9 | | 1 | | 14 | 7 | 79 | 56 | 57 | 87 | 6 | 67 | | |
| | 0.8 | | | 50 | 63 | 64 | 33 | 20 | 40 | 79 | 22 | 57 | | |
| | 0.7 | | | 27 | 53 | 12 | 12 | 99 | 6 | 20 | 4 | 30 | 31 | |
| | 0.6 | | | 23 | 66 | 79 | 33 | 7 | 32 | 82 | 67 | 28 | 39 | |
| | 0.5 | | | | | | | | | | | | | |

In the aggregated summary above, the columns of the table/matrix represent columns of elements corresponding to ranges of engine cylinder firing frequency. The rows of the table/matrix represent rows of elements corresponding to RMS crankcase pressures (MRS CCPress (kPa)).

As an example of the updating the aggregated summary, in the aggregated summary provided above if the determined RMS crankcase pressure was 1.25 kPa and the determined engine cylinder firing frequency was 95 Hz, then the element with a value of 74 would be selected to be incremented by the determination time period.

As discussed for the previous embodiment, after step S140, the local monitoring routine may proceed to a broadcasting step S150, or the local monitoring routine may proceed to a sleep step S160 if it is not required to broadcast the aggregated summary at that point. Broadcasting step S150 may be substantially the same as broadcasting step S50 but broadcasting the larger aggregated summary with both crankcase pressure and engine cylinder firing frequency data included.

Sleep step S160 may be substantially the same as broadcasting step S60.

**Industrial applicability**

By providing a smart breather filter assembly 200, data regarding engine running characteristics may be obtained. Even if the smart breather filter assembly 200 is fitted to an engine post manufacture of the engine, the time and inconvenience associated with its installation is minimal. Furthermore, the operator is not inconvenienced in any way and may not even be aware of the installation of the smart breather filter assembly 200. Since the smart breather filter assembly 200 is configured to determine engine firing frequency through sensing pressure , the smart breather filter assembly 200 does not require detailed knowledge of the engine to which it is attached in order to provide a meaningful output. By enabling the smart breather filter assembly 200 to be registered to a particular engine (e.g. via an application on a smart phone) the data provided by the smart breather filter assembly 200 may be combined with data identifying features of the engine (e.g. number of engine cylinders) in order to obtain further information about engine performance, including engine speed in revolutions per minute (RPM) and torque.

By assembling the measured data in an aggregated summary, only the summary information needs to be transmitted off the smart breather filter assembly 200. In this way, the amount of data (by which is meant the number of data points in the aggregated summary) to be transmitted does not increase with time. Furthermore, in the event that the engine (and hence the attached smart breather filter assembly 200) is moved away from an area where data transmissions are received, when subsequent transmissions are received, all of the aggregated data will be sent which will include within the aggregated summary the data obtained during the period in which no transmissions were received.

In this way, the bandwidth required for communication is low, which enables a wider range of communication options to be employed and also reduces costs associated with data transmission.

Furthermore, since the smart breather filter assembly 200 is compatible with legacy engines that are entirely mechanical and have no electronic control system, data regarding engine running characteristics can be obtained from a population of engines for which hitherto little or no in-the-field engine running data has been obtained.

Furthermore, since the smart breather filter assembly 200 requires only mechanical compatibility with an internal combustion engine 1 having a prior art engine breather filter apparatus, one single smart breather filter assembly 200 can be provided for use on any one of an entire range of engines. This reduces costs and increases the likelihood of availability.

**Claims**

1. An engine breather filter assembly (200) for monitoring an internal combustion engine (1) comprising:

    a filter cavity (259) configured to accommodate a breather filter element (265);
    a processor (239);
    a sensor module configured to sense a characteristic of the internal combustion engine and output data representative of the sensed characteristic to the processor;
    wherein the engine breather filter assembly (200) is configured to provide a housing for the processor (239); and the processor (239) is configured to determine a value representative of the firing frequency of the internal combustion engine (1) based on the output data,
    wherein the sensor module comprises a pressure sensor and the sensed characteristic comprises engine crankcase pressure,
    wherein the processor (239) is configured to calculate a root mean squared value of engine crankcase pressure, and
    wherein the processor (239) is configured to generate an aggregated summary of the total engine running at each combination of firing frequency and root mean squared engine crank case pressure.

2. The engine breather filter assembly (200) of claim 1 wherein the aggregated summary is updated at a predetermined update frequency by incrementing the aggregated summary with a current value of firing frequency and a current value of root mean squared engine crank case pressure.

3. The engine breather filter assembly (200) of claim 1 or claim 2 wherein the aggregated summary takes the form of a histogram.

4. The engine breather filter assembly (200) of any preceding claim further comprising a communications module (238), wherein the communications module (238) is configured to transmit the aggregated summary.

5. The engine breather filter assembly (200) according to any preceding claim, wherein the engine breather filter assembly (200) comprises:

    a pre-filter chamber (267) fluidly upstream of the filter cavity (259) and configured to channel pre-filtered engine gas into the filter cavity (259);

a post-filter chamber (266) fluidly downstream of the filter cavity (259)and configured to channel post-filtered engine gas out of the filter cavity (259);

a drain port fluidly downstream of the filter cavity (259) and configured to channel condensed liquid out of the filter cavity ("59); and

a first fluid conduit (226) configured to provide fluid communication between a first sensing port (224) of the pressure sensor and a first one of the pre-filter chamber (267)and the post-filter chamber (266).

6. The engine breather filter assembly of claim 5, wherein the engine breather filter assembly (200) comprises a second fluid conduit (227) configured to provide fluid communication between a second sensing port (225) of the pressure sensor and a second one of the pre-filter chamber (267) and the post-filter chamber (266).

7. The engine breather filter assembly (200) of claim 6 wherein the pressure sensor is a differential pressure sensor (223) configured to sense a differential pressure between the first sensing port (224) and the second sensing port (225).

8. The engine breather filter assembly (200) of any preceding claim, wherein the processor (239) is configured to receive engine crankcase pressure and to determine a frequency of crankcase pressure oscillation thereby to determine the value representative of the firing frequency.

9. The engine breather filter assembly (200) of any preceding claim wherein the sensor module comprises a vibration sensor, wherein the sensed characteristic of the internal combustion engine comprises vibration data with time.

10. The engine breather filter assembly (200) of claim 9, wherein the sensed characteristic comprises both engine crankcase pressure and engine vibration data, and wherein the processor (239) uses both engine crankcase pressure and engine vibration data to improve accuracy of firing frequency determination.

11. The engine breather filter assembly (200) of any preceding claim further comprising one or more additional transducers, such as a temperature sensor, wherein, optionally, the communications module is configured to transmit data derived from the one or more additional transducers.


**Patentansprüche**

1. Motorentlüftungsfilteranordnung (200) zum Überwachen eines Verbrennungsmotors (1), umfassend:

einen Filterhohlraum (259), der konfiguriert ist, um ein Entlüftungsfilterelement (265) aufzunehmen;
einen Prozessor (239);
ein Sensormodul, das konfiguriert ist, um eine Eigenschaft des Verbrennungsmotors zu erfassen und Daten, die für die erfasste Eigenschaft repräsentativ sind, an den Prozessor auszugeben;
wobei die Motorentlüftungsfilteranordnung (200) konfiguriert ist, um ein Gehäuse für den Prozessor (239) bereitzustellen; und
der Prozessor (239) konfiguriert ist, um einen Wert, der für die Zündfrequenz des Verbrennungsmotors (1) repräsentativ ist, basierend auf den Ausgabedaten zu bestimmen,
wobei das Sensormodul einen Drucksensor umfasst und die erfasste Eigenschaft einen Motorkurbelgehäusedruck umfasst,
wobei der Prozessor (239) konfiguriert ist, um einen quadratischen Mittelwert des Motorkurbelgehäusedrucks zu berechnen, und
wobei der Prozessor (239) konfiguriert ist, um eine aggregierte Zusammenfassung des gesamten Motors zu erzeugen, der bei jeder Kombination von Zündfrequenz und quadratischem Mittel des Motorkurbelgehäusedrucks läuft.

2. Motorentlüftungsfilteranordnung (200) nach Anspruch 1, wobei die aggregierte Zusammenfassung bei einer vorbestimmten Aktualisierungsfrequenz aktualisiert wird, indem die aggregierte Zusammenfassung mit einem aktuellen Wert der Zündfrequenz und einem aktuellen Wert des quadratischen Mittels des Motorkurbelgehäusedrucks inkrementiert wird.

3. Motorentlüftungsfilteranordnung (200) nach Anspruch 1 oder Anspruch 2, wobei die aggregierte Zusammenfassung die Form eines Histogramms annimmt.

**4.** Motorentlüftungsfilteranordnung (200) nach einem der vorstehenden Ansprüche, ferner umfassend ein Kommunikationsmodul (238), wobei das Kommunikationsmodul (238) konfiguriert ist, um die aggregierte Zusammenfassung zu übertragen.

**5.** Motorentlüftungsfilteranordnung (200) nach einem der vorstehenden Ansprüche, wobei die Motorentlüftungsfilteranordnung (200) Folgendes umfasst:

eine Vorfilterkammer (267), die dem Filterhohlraum (259) fluidisch vorgelagert und konfiguriert ist, um vorgefiltertes Motorgas in den Filterhohlraum (259) zu leiten;
eine Nachfilterkammer (266), die dem Filterhohlraum (259) fluidisch nachgelagert und konfiguriert ist, um nachgefiltertes Motorgas aus dem Filterhohlraum (259) zu leiten;
einen Ablassanschluss, der dem Filterhohlraum (259) fluidisch nachgelagert und konfiguriert ist, um kondensierte Flüssigkeit aus dem Filterhohlraum ("59) zu leiten; und
eine erste Fluidleitung (226), die konfiguriert ist, um eine Fluidverbindung zwischen einem ersten Erfassungsanschluss (224) des Drucksensors und einer ersten der Vorfilterkammer (267) und der Nachfilterkammer (266) bereitzustellen.

**6.** Motorentlüftungsfilteranordnung nach Anspruch 5, wobei die Motorentlüftungsfilteranordnung (200) eine zweite Fluidleitung (227) umfasst, die konfiguriert ist, um eine Fluidverbindung zwischen einem zweiten Erfassungsanschluss (225) des Drucksensors und einer zweiten der Vorfilterkammer (267) und der Nachfilterkammer (266) bereitzustellen.

**7.** Motorentlüftungsfilteranordnung (200) nach Anspruch 6, wobei der Drucksensor ein Differenzdrucksensor (223) ist, der konfiguriert ist, um einen Differenzdruck zwischen dem ersten Erfassungsanschluss (224) und dem zweiten Erfassungsanschluss (225) zu erfassen.

**8.** Motorentlüftungsfilteranordnung (200) nach einem der vorstehenden Ansprüche, wobei der Prozessor (239) konfiguriert ist, um Motorkurbelgehäusedruck zu empfangen und eine Frequenz einer Kurbelgehäusedruckoszillation zu bestimmen, um dadurch den Wert zu bestimmen, der für die Zündfrequenz repräsentativ ist.

**9.** Motorentlüftungsfilteranordnung (200) nach einem der vorstehenden Ansprüche, wobei das Sensormodul einen Vibrationssensor umfasst, wobei die erfasste Eigenschaft des Verbrennungsmotors Vibrationsdaten über die Zeit umfasst.

**10.** Motorentlüftungsfilteranordnung (200) nach Anspruch 9, wobei die erfasste Eigenschaft sowohl Motorkurbelgehäusedruck- als auch Motorvibrationsdaten umfasst, und wobei der Prozessor (239) sowohl Motorkurbelgehäusedruck- als auch Motorvibrationsdaten verwendet, um eine Genauigkeit der Zündfrequenzbestimmung zu verbessern.

**11.** Motorentlüftungsfilteranordnung (200) nach einem der vorstehenden Ansprüche, ferner umfassend einen oder mehrere zusätzliche Wandler, wie einen Temperatursensor, wobei optional das Kommunikationsmodul konfiguriert ist, um Daten zu übertragen, die von dem einen oder den mehreren zusätzlichen Wandlern abgeleitet sind.

**Revendications**

**1.** Ensemble de filtre de reniflard de moteur (200) pour la surveillance d'un moteur à combustion interne (1), comprenant :

une cavité de filtre (259) configurée pour recevoir un élément de filtre de reniflard (265) ;
un processeur (239) ;
un module de capteur configuré pour détecter une caractéristique du moteur à combustion interne et des données de sortie représentatives de la caractéristique détectée au processeur ;
dans lequel l'ensemble de filtre de reniflard de moteur (200) est configuré pour fournir un boîtier pour le processeur (239) ; et
le processeur (239) est configuré pour déterminer une valeur représentative de la fréquence de déclenchement du moteur à combustion interne (1) sur la base des données de sortie,
dans lequel le module de capteur comprend un capteur de pression et la caractéristique détectée comprend une pression de carter de moteur,

dans lequel le processeur (239) est configuré pour calculer une valeur moyenne quadratique de la pression du carter de moteur, et

dans lequel le processeur (239) est configuré pour générer un résumé agrégé du moteur total circulant à chaque combinaison de la fréquence de déclenchement et de la pression moyenne quadratique du carter de moteur.

2. Ensemble de filtre de reniflard de moteur (200) selon la revendication 1, dans lequel le résumé agrégé est mis à jour à une fréquence de mise à jour prédéterminée en incrémentant le résumé agrégé avec une valeur courante de fréquence de déclenchement et une valeur courante de pression moyenne quadratique de carter de moteur.

3. Ensemble de filtre de reniflard de moteur (200) selon la revendication 1 ou la revendication 2, dans lequel le résumé agrégé prend la forme d'un histogramme.

4. Ensemble filtre de reniflard de moteur (200) selon l'une quelconque des revendications précédentes, comprenant en outre un module de communication (238), dans lequel le module de communication (238) est configuré pour transmettre le résumé agrégé.

5. Ensemble de filtre de reniflard de moteur (200) selon l'une quelconque des revendications précédentes, dans lequel l'ensemble de filtre de reniflard de moteur (200) comprend :

une chambre de pré-filtre (267) fluidiquement en amont de la cavité de filtre (259) et configurée pour canaliser le gaz de moteur préfiltré dans la cavité de filtre (259) ;
une chambre de post-filtre (266) fluidiquement en aval de la cavité de filtre (259) et configurée pour canaliser le gaz de moteur post-filtré hors de la cavité de filtre (259) ;
un orifice de drainage fluidiquement en aval de la cavité de filtre (259) et configuré pour canaliser le liquide condensé hors de la cavité de filtre ("59) ; et
un premier conduit de fluide (226) configuré pour fournir une communication fluidique entre un premier orifice de détection (224) du capteur de pression et une première de la chambre de pré-filtre (267) et de la chambre de post-filtre (266).

6. Ensemble filtre de reniflard de moteur selon la revendication 5, dans lequel l'ensemble de filtre de reniflard de moteur (200) comprend un deuxième conduit de fluide (227) configuré pour fournir une communication fluidique entre un deuxième orifice de détection (225) du capteur de pression et une deuxième de la chambre de pré-filtre (267) et de la chambre de post-filtre (266).

7. Ensemble de filtre de reniflard de moteur (200) selon la revendication 6, dans lequel le capteur de pression est un capteur de pression différentielle (223) configuré pour détecter une pression différentielle entre le premier orifice de détection (224) et le second orifice de détection (225).

8. Ensemble filtre de reniflard de moteur (200) selon l'une quelconque des revendications précédentes, dans lequel le processeur (239) est configuré pour recevoir une pression de carter de moteur et pour déterminer une fréquence d'oscillation de pression de carter pour déterminer ainsi la valeur représentative de la fréquence de déclenchement.

9. Ensemble filtre de reniflard de moteur (200) selon l'une quelconque des revendications précédentes, dans lequel le module de capteur comprend un capteur de vibrations, dans lequel la caractéristique détectée du moteur à combustion interne comprend des données de vibration avec le temps.

10. Ensemble de filtre de reniflard de moteur (200) selon la revendication 9, dans lequel la caractéristique détectée comprend à la fois une pression de carter de moteur et des données de vibration de moteur, et dans lequel le processeur (239) utilise à la fois la pression du carter de moteur et les données de vibration du moteur pour améliorer la précision de la détermination de fréquence de déclenchement.

11. Ensemble de filtre de reniflard de moteur (200) selon l'une quelconque des revendications précédentes, comprenant en outre un ou plusieurs transducteurs supplémentaires, tels qu'un capteur de température, dans lequel, éventuellement, le module de communication est configuré pour transmettre des données dérivées du ou des transducteurs supplémentaires.

**Fig. 1**

**Fig. 2**

**Fig. 3**

*Fig. 4*

*Fig. 5*

**Fig. 6**

1

200

*Fig. 7*

**Fig. 8**

S70
Receive aggregated
summary and
identification data

S80
Process aggregated
summary according to
identification data

S90
Output engine speed
usage data

*Fig. 9*

**Fig. 10**

**Data.** **Frequency Spectrum**
**At test time:189 seconds**

*Fig. 11*

```
┌─────────────────────────┐
│          S10            │
│          Wake           │
└─────────────────────────┘
             │
             ▼
┌─────────────────────────┐
│          S20            │
│  Obtain pressure sensor │
│          data           │
└─────────────────────────┘
             │
             ▼
┌─────────────────────────┐
│          S30            │
│     Determine engine    │
│  cylinder firing frequency│
└─────────────────────────┘
             │
             ▼
┌─────────────────────────┐
│          S40            │
│     Update aggregated   │
│         summary         │
└─────────────────────────┘
             │
             ▼
┌─────────────────────────┐
│          S50            │
│   Broadcast usage table │
│     and local device    │
│       identification    │
└─────────────────────────┘
             │
             ▼
┌─────────────────────────┐
│          S60            │
│  Sleep for predetermined│
│        time period      │
└─────────────────────────┘
```

*Fig. 12*

S70
Receive aggregated
summary and
identification data

S80
Process aggregated
summary according to
identification data

S90
Output engine speed
usage data

*Fig. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014055919 A
- US 6422224 B
- EP 0863404 A
- US 4189940 A